# EUROPEAN PATENT APPLICATION

(11) **EP 4 513 059 A1**
(43) Date of publication of application: **26.02.2025**
(21) Application number: 23791653.1
(22) Date of filing: 03.04.2023
(51) Int. Cl.: F16H 25/22

(54) **BALL SCREW DEVICE**

(30) Priority: 20.04.2022 JP 2022069511
(71) Applicant: NSK Ltd., Tokyo 141-8560 (JP)
(72) Inventor: OKA, Keitaro, Fujisawa-shi, Kanagawa 252-0811 (JP)
(74) Representative: SSM Sandmair
(86) International application number: PCT/JP2023/013760
(87) International publication number: WO 2023/204002

(57) **Abstract**

A ball screw device includes a screw shaft, a nut, a plurality of balls, a circulating component, a pedestal component, and a fixing component. The nut is provided with through holes penetrating the nut in an assembling direction. The circulating component includes a cylindrical portion, leg portions, and bent portions. The pedestal component includes a main body portion extending along the cylindrical portion and the bent portions. The main body portion includes a bearing surface having a groove shape. A cross-sectional shape of the bearing surface is an arc shape about center lines of the cylindrical portion and the two bent portions. A portion of the bearing surface abutting on the cylindrical portion forms a support surface having an arc shape and opened in a direction opposite to the assembling direction when viewed in a rotation axis direction parallel to the center line of the cylindrical portion. Portions of the bearing surface abutting on the respective bent portions form restricting surfaces each having an arc shape and opened to the through hole when viewed in the assembling direction. The restricting surfaces each include a first restricting portion abutting on the bent portion in a first rotation direction and a second restricting portion abutting on the bent portion in a second rotation direction.

## Description

### Field

The present disclosure relates to a ball screw device.

### Background

A ball screw device is a device that converts a rotational motion into a linear motion or a linear motion into a rotational motion. The ball screw device includes a screw shaft, a nut, a plurality of balls rolling on a raceway between the screw shaft and the nut, and a circulating component that returns, to one end of the raceway, the balls having rolled from the one end to the other end of the raceway.

As an example of the circulating component, there is a tubular circulating component as illustrated in Patent Literature 1. The tubular circulating component includes a cylindrical portion extending along an outer peripheral surface of the nut, a bent portion bent from the cylindrical portion, and a leg portion extending from the bent portion. The leg portion is inserted into a through hole penetrating the outer peripheral surface and an inner peripheral surface of the nut. Then, the ball is scooped up from the raceway at the tip of the leg portion, and the ball is returned to the raceway from the tip of the leg portion.

The through hole of the nut penetrates in a direction in which the circulating component is assembled to the nut (hereinafter, referred to as an assembling direction). In addition, the leg portion of Patent Literature 1 also extends in the assembling direction. That is, the leg portion and the through hole extend in the same direction, and the leg portion is fitted into the through hole. With this fitting, the leg portion is restricted from rotating about the cylindrical portion. Hereinafter, rotating about the cylindrical portion may be simply referred to as rotating.

### Citation List

### Patent Literature

Patent Literature 1: JP 2003-269564 A

### Summary

### Technical Problem

In recent years, a circulating component that scoops up balls in a direction tangential to a raceway has been developed. A leg portion of the circulating component is inclined with respect to the assembling direction of the circulating component. That is, the leg portion does not fit into the through hole, and the leg portion easily rotates. If the leg portion rotates, the tip of the leg portion is displaced, and smooth scooping up of the ball and returning of the ball cannot be achieved.

The present disclosure has been made in view of the above, and an object of the present disclosure is to provide a ball screw device that suppresses displacement in a rotation direction by a leg portion.

### Solution to Problem

In order to achieve the above object, a ball screw device according to an aspect of the present disclosure includes a screw shaft, a nut penetrated by the screw shaft, a plurality of balls disposed between the screw shaft and the nut, a circulating component having a circular cross-sectional shape and circulating the balls, a pedestal component disposed between an outer peripheral surface of the nut and the circulating component, and a fixing component provided such that the fixing component and the pedestal component sandwich the circulating component. The nut is provided with two through holes penetrating the nut in an assembling direction in which the circulating component is assembled to the outer peripheral surface of the nut. The circulating component includes a cylindrical portion having a cylindrical shape and disposed on an outer peripheral side of the nut, two leg portions inserted into the through holes, and two bent portions connecting the cylindrical portion and the leg portions. The pedestal component includes a main body portion extending along the cylindrical portion and the two bent portions. The main body portion includes a bearing surface that has a groove shape and on which the cylindrical portion and the two bent portions are disposed. A cross-sectional shape of the bearing surface is an arc shape about center lines of the cylindrical portion and the two bent portions. A portion of the bearing surface abutting on the cylindrical portion forms a support surface having an arc shape and opened in a direction opposite to the assembling direction when viewed in a rotation axis direction parallel to the center line of the cylindrical portion. Portions of the bearing surface abutting on the respective bent portions form restricting surfaces each having an arc shape and opened in a direction indicated by an end of the main body portion when viewed in the assembling direction. The restricting surfaces each include a first restricting portion abutting on the bent portion from a first rotation direction about the center line of the cylindrical portion, and a second restricting portion abutting on the bent portion from a second rotation direction opposite to the first rotation direction.

According to the present disclosure, when the circulating component is assembled to the nut, the bent portions abut on the first restricting portion and the second restricting portion. With this configuration, it is avoided that the bent portion is assembled in a state of being rotated in the first rotation direction or the second rotation direction. As a result, displacement of the leg portion connected to the bent portion in the rotation direction is suppressed. In addition, a conventional cylindrical portion is sandwiched between an outer peripheral surface of a nut and a fixing component. An outer peripheral surface of a conventional nut is a flat surface, and has a small fixing force with respect to a circulating component. When a ball rolls in the circulating component, the circulating component vibrates, and wear of the circulating component occurs. On the other hand, the cylindrical portion of the present disclosure is supported by the bearing surface having an arc shape. That is, the contact area between the pedestal component and the cylindrical portion increases, and the fixing force for fixing the cylindrical portion is high. Therefore, vibration of the circulating component is less likely to occur, and wear of the circulating component is suppressed.

As an aspect of the ball screw device according to an aspect of the present disclosure, it is preferred that recesses to avoid contact with the two bent portions be provided at edges of the through holes on the outer peripheral surface of the nut, and the pedestal component include two fitting portions protruding from end portions of the main body portion in the assembling direction and fitted into the recesses.

According to the above configuration, it is avoided that the main body portion and the circulating component are assembled in a state of being displaced along the outer peripheral surface of the nut. That is, the positioning accuracy of the leg portion is improved. In addition, a recess is used as a portion into which the fitting portion is fitted. With this configuration, it is not necessary to separately form a recess for fitting the fitting portion, and it is possible to avoid a decrease in the strength of the nut.

As an aspect of the ball screw device according to an aspect of the present disclosure, it is preferred that the fitting portion include an inner surface facing the through hole when viewed in the assembling direction, the bearing surface be extended to the inner surface, and the fitting portion abut on the bent portion or the leg portion.

According to the above configuration, the number of portions that support the bent portion or the leg portion increases. Therefore, the positioning accuracy of the leg portion is improved.

As an aspect of the ball screw device according to an aspect of the present disclosure, it is preferred that the pedestal component be made of resin.

According to the above configuration, a load is applied by the fixing component, and the main body portion can be assembled to the nut in a compressed state. According to this, even when wear occurs in the cylindrical portion of the circulating component, a gap is not formed between the cylindrical portion and the main body portion. Therefore, a sandwiching force by the fixing component and the pedestal component is maintained for a long period of time. From the above, it is difficult for the circulating component to vibrate and be worn.

As an aspect of the ball screw device according to an aspect of the present disclosure, it is preferred that the two leg portions extend tangentially to a raceway between the nut and the screw shaft.

As an aspect of the ball screw device according to an aspect of the present disclosure, it is preferred that the main body portion be provided with a through hole penetrating the main body portion.

When the pedestal component is exposed to a high temperature, the main body portion is thermally expanded in a length direction. Then, the restricting surface of the main body portion presses the bent portions away from each other. On the other hand, the main body portion receives a reaction force from the two pressed bent portions. Therefore, the main body portion is deformed such that the through hole is crushed. From the above, it is avoided that the thermally expanded main body portion presses the bent portion and the tip of the leg portion is displaced.

As an aspect of the ball screw device according to an aspect of the present disclosure, it is preferred that the main body portion include two divided main body portions separated at a central portion of the main body portion in a length direction of the main body portion, and a gap be provided between the two divided main body portions.

When divided main body portions are thermally expanded, the divided main body portions extend toward a gap between the two divided main body portions. Therefore, it is avoided that the thermally expanded main body portion presses the bent portion and the tip of the leg portion is displaced.

According to the above configuration, the scooping up of the balls and the returning of the balls become smooth.

### Advantageous Effects of Invention

According to the ball screw device of the present disclosure, the displacement of the leg portion in the rotation direction is suppressed.

### Brief Description of Drawings

FIG. 1 is a diagram of a ball screw device of a first embodiment as viewed in an assembling direction of a circulating component.
FIG. 2 is an exploded perspective view illustrating a state in which a nut, a pedestal component, and the circulating component are extracted from the ball screw device of the first embodiment and disassembled.
FIG. 3 is a diagram of the nut of the first embodiment as viewed in the assembling direction.
FIG. 4 is a diagram illustrating an assembled state of the pedestal component and the circulating component to the nut in the first embodiment.
FIG. 5 is a diagram of the pedestal component and the circulating component in the first embodiment as viewed in a direction indicated by arrow V in FIG. 4.
FIG. 6 is a cross-sectional view taken along line VI-VI in FIG. 1.
FIG. 7 is a cross-sectional view taken along line VII-VII in FIG. 1.
FIG. 8 is a plan view of the pedestal component as viewed in the assembling direction.
FIG. 9 is a cross-sectional view of the pedestal component taken along a center line.
FIG. 10 is a cross-sectional view taken along line X-X in FIG. 8.
FIG. 11 is a cross-sectional view taken along line XI-XI in FIG. 8.
FIG. 12 is a cross-sectional view taken along line XII-XII in FIG. 9.
FIG. 13 is a perspective view of a pedestal component according to Modification 1 as viewed in the assembling direction.
FIG. 14 is a diagram of a pedestal component according to Modification 2 as viewed in the assembling direction.
FIG. 15 is a side view of the pedestal component according to Modification 2 as viewed from the side.
FIG. 16 is a diagram of a pedestal component according to Modification 3 as viewed in the assembling direction. Description of Embodiments

A mode for carrying out the invention will be described in detail with reference to the drawings. The present disclosure is not limited by the contents described in the following description. In addition, the constituent elements described below include those that can be easily assumed by those skilled in the art and those that are substantially the same. Furthermore, the constituent elements described below can be appropriately combined.

### (First Embodiment)

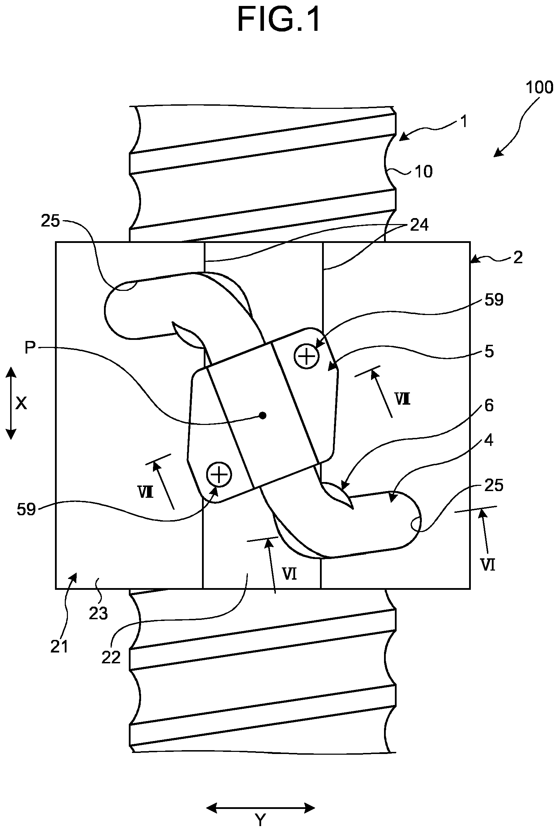

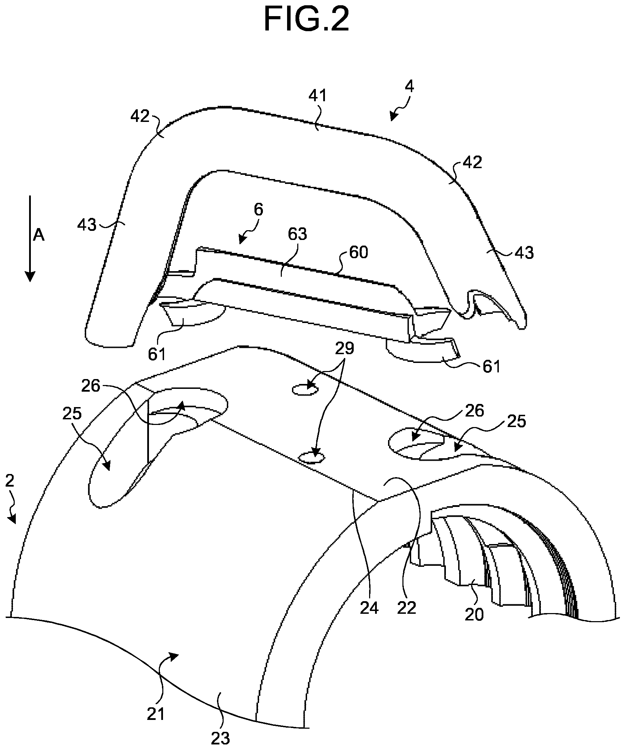

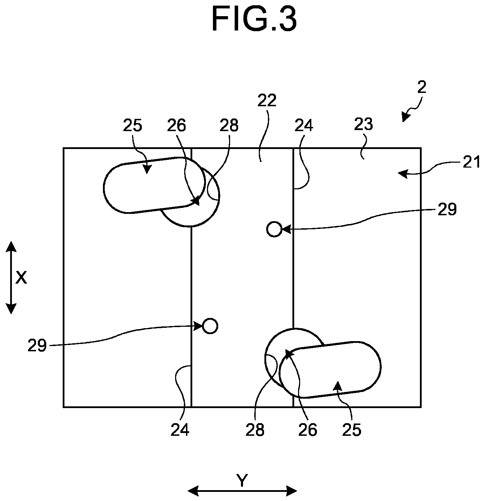

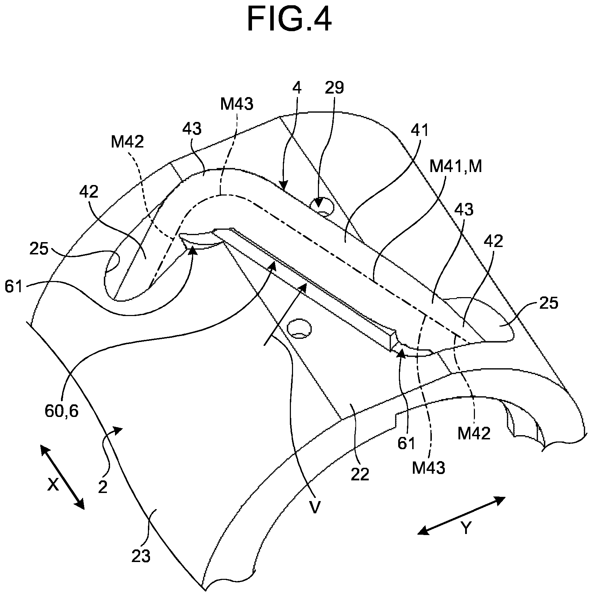

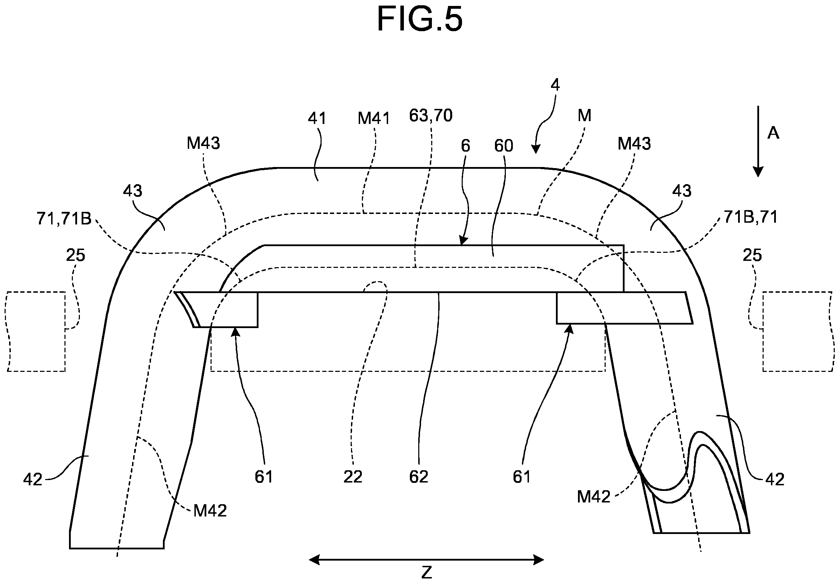

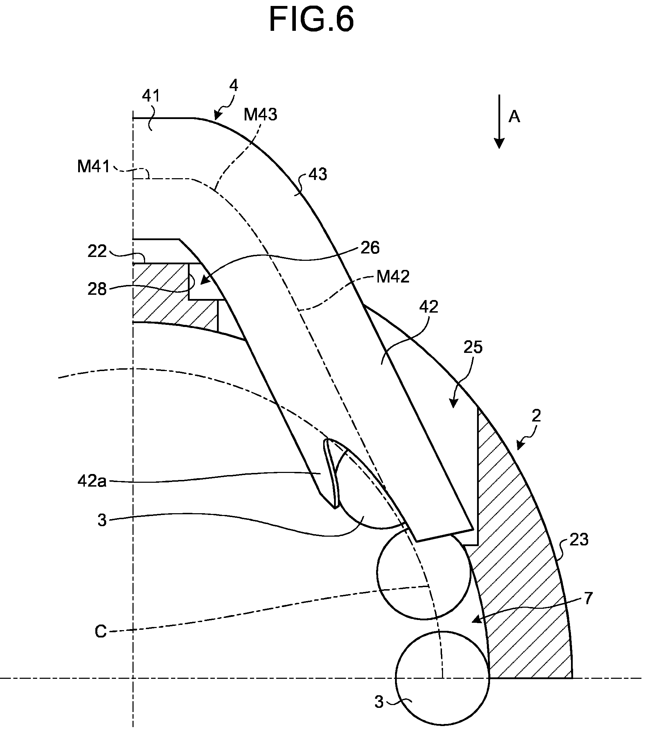

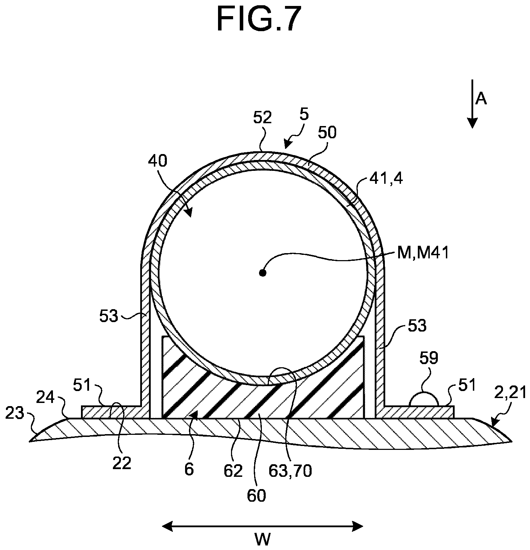

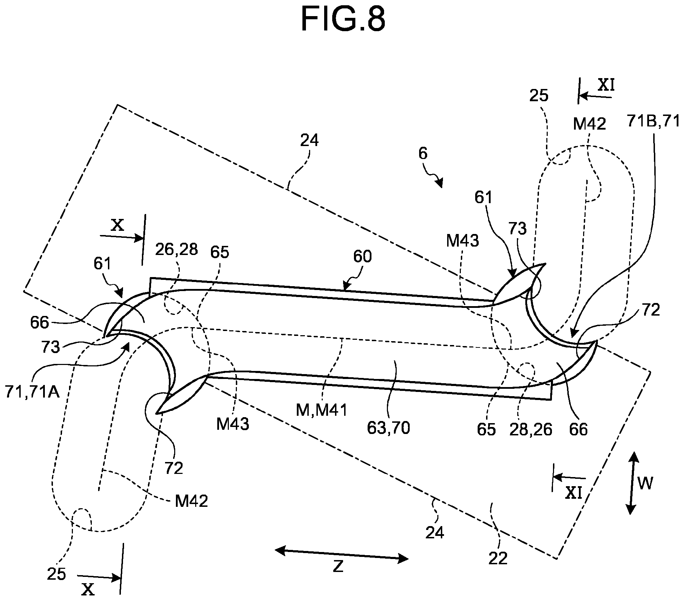

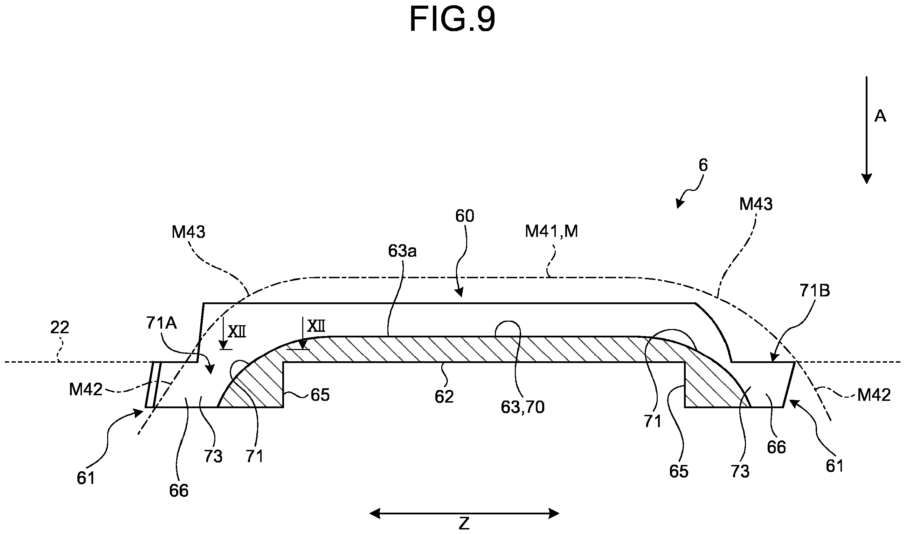

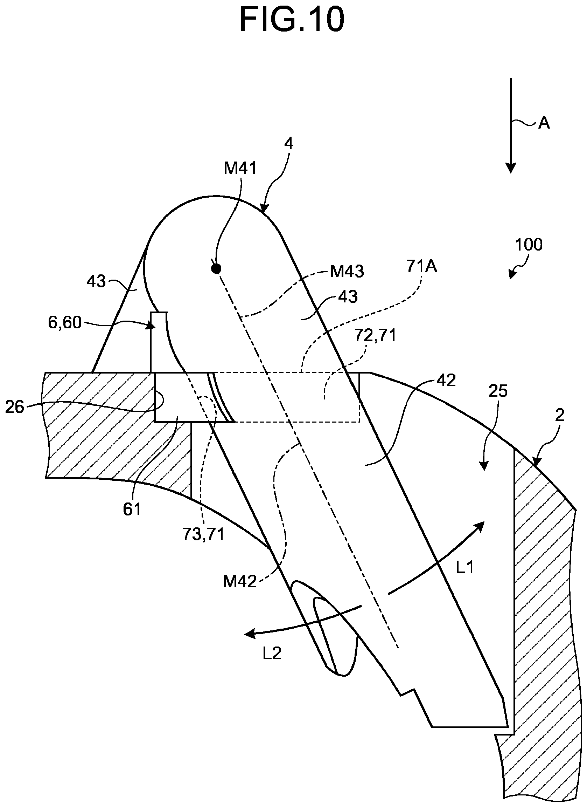

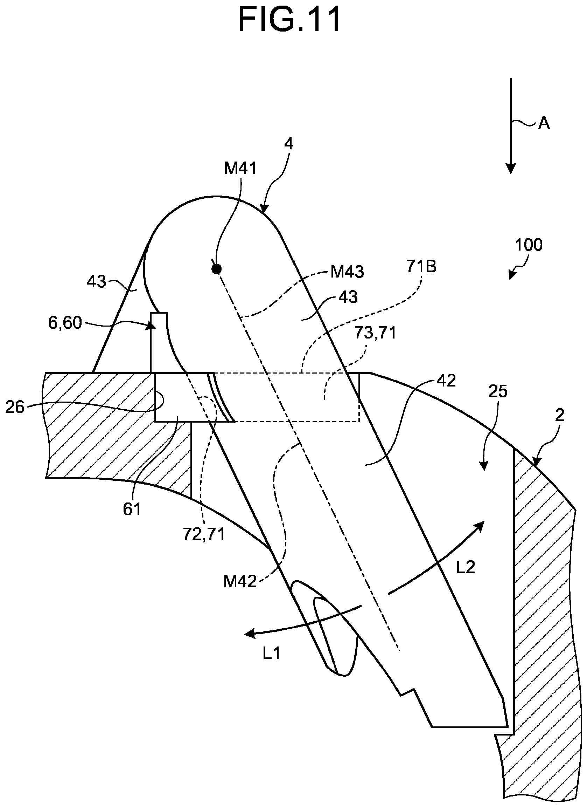

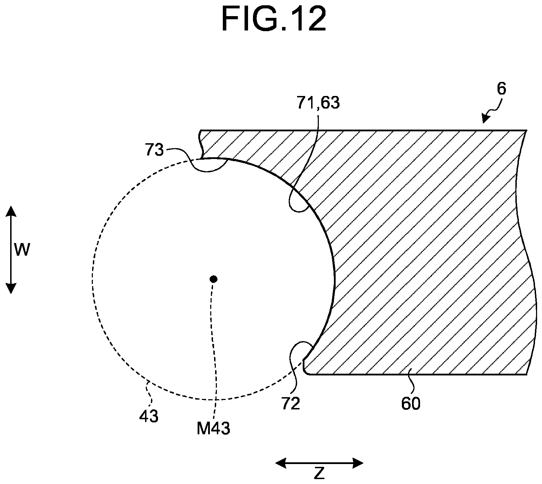

FIG. 1 is a diagram of a ball screw device of a first embodiment as viewed in an assembling direction of a circulating component. FIG. 2 is an exploded perspective view illustrating a state in which a nut, a pedestal component, and the circulating component are extracted from the ball screw device of the first embodiment and disassembled. FIG. 3 is a diagram of the nut of the first embodiment as viewed in the assembling direction. FIG. 4 is a diagram illustrating an assembled state of the pedestal component and the circulating component to the nut in the first embodiment. FIG. 5 is a diagram of the pedestal component and the circulating component in the first embodiment as viewed in a direction indicated by arrow V in FIG. 4. FIG. 6 is a cross-sectional view taken along line VI-VI in FIG. 1. FIG. 7 is a cross-sectional view taken along line VII-VII in FIG. 1. FIG. 8 is a plan view of the pedestal component as viewed in the assembling direction. FIG. 9 is a cross-sectional view of the pedestal component taken along a center line. FIG. 10 is a cross-sectional view taken along line X-X in FIG. 8. FIG. 11 is a cross-sectional view taken along line XI-XI in FIG. 8. FIG. 12 is a cross-sectional view taken along line XII-XII in FIG. 9.

As illustrated in FIG. 1, a ball screw device 100 of the first embodiment includes a screw shaft 1, a nut 2, a plurality of balls 3 (see FIG. 6), the circulating component 4, a fixing component 5, and the pedestal component 6. In the following description, a direction parallel to the screw shaft 1 is referred to as an axial direction.

The screw shaft 1 is a solid rod-like component. An outer peripheral raceway surface 10 is provided on an outer peripheral surface of the screw shaft 1. The nut 2 is a cylindrical component. An inner peripheral raceway surface 20 (see FIG. 2) is provided on an inner peripheral surface of the nut 2. The screw shaft 1 penetrates the nut 2, and the outer peripheral raceway surface 10 and the inner peripheral raceway surface 20 face each other. A helical raceway 7 (see FIG. 6) on which the ball 3 rolls is formed between the outer peripheral raceway surface 10 and the inner peripheral raceway surface 20.

An outer peripheral surface 21 of the nut 2 is D-cut. Therefore, the outer peripheral surface 21 has a flat surface 22 and arcuate surfaces 23 having an arc shape (substantially C-shape) when viewed in the axial direction. The flat surface 22 is a surface on which the circulating component 4 is installed. Therefore, a direction parallel to a perpendicular to the flat surface 22 and approaching the flat surface 22 is a direction in which the circulating component 4 is assembled to the nut 2 (see arrow A in FIG. 2. hereinafter referred to as an assembling direction A).

Two ridge lines 24 extending in the axial direction are provided at boundaries between the flat surface 22 and the arcuate surfaces 23. Hereinafter, a direction in which the ridge line 24 extends is referred to as a length direction X of the flat surface 22. In addition, a direction parallel to the flat surface 22 and orthogonal to the length direction X of the flat surface 22 is referred to as a width direction Y of the flat surface 22. The nut 2 is provided with two through holes 25 penetrating the outer peripheral surface 21 and the inner peripheral surface of the nut 2.

Note that in the present embodiment, the two through holes 25, the circulating component 4, the fixing component 5, and the pedestal component 6 have point-symmetrical shapes with respect to a point P (see FIG. 1) of the flat surface 22 when viewed in the assembling direction A. The point P of the flat surface 22 is an arbitrary point on the flat surface 22. Therefore, even in a state where any one of the circulating component 4, the fixing component 5, and the pedestal component 6 rotates about the point P of the flat surface 22, the circulating component 4, the fixing component 5, and the pedestal component 6 can be assembled to the nut 2. Therefore, in the following description, a configuration on one side with respect to the point P will be described as a representative example, and description of a configuration on the other side with respect to the point P will be omitted.

As illustrated in FIG. 2, the through hole 25 is formed by cutting the outer peripheral surface 21 of the nut 2 in the assembling direction A. That is, the through hole 25 extends in the assembling direction A (see FIGS. 5 and 6). Note that in the present disclosure, a method for forming the through hole may be a processing method other than cutting.

As illustrated in FIG. 3, the through hole 25 crosses the ridge line 24 and penetrates the flat surface 22 and the arcuate surface 23. In addition, the through hole 25 is longer in the width direction Y of the flat surface 22 than in the length direction X of the flat surface 22. With this configuration, leg portions 42 of the circulating component 4 can be disposed in the through holes 25 in a state where the leg portions are inclined in the width direction Y of the flat surface 22.

A recess 26 recessed toward the inner peripheral side of the nut 2 is provided at an edge of the through hole 25 on the outer peripheral surface 21 of the nut 2. The recess 26 is provided to avoid contact with a bent portion 43 of the circulating component 4 (see FIG. 6). Note that in FIG. 6, in order to make the recess 26 easy to see, a fitting portion 61 of the pedestal component 6 disposed in the recess 26 is omitted. In addition, the recess 26 is provided with a fitting surface 28 having an arc shape. In addition, the flat surface 22 is provided with two female screw holes 29 into which screws 59 for attaching the fixing component 5 are screwed.

The circulating component 4 is a tubular component, and an internal space forms a return path 40 (see FIG. 7). As illustrated in FIGS. 4 and 5, the circulating component 4 includes a cylindrical portion 41 disposed on the outer peripheral side of the nut 2, the two leg portions 42 inserted into the through holes 25, and the two bent portions 43 connecting the cylindrical portion 41 and the leg portions 42.

Cross-sectional shapes of the cylindrical portion 41, the leg portion 42, and the bent portion 43 are circular (see FIG. 7). Hereinafter, a line obtained by continuously connecting the centers of the respective cross-sectional shapes (circular shapes) of the cylindrical portion 41, the leg portion 42, and the bent portion 43 is referred to as a center line M of the circulating component 4. In addition, in the first embodiment, the circulating component 4 is manufactured by bending a metal cylindrical component by press working.

Note that although the circulating component 4 of the first embodiment is made of metal, a circulating component may be made of resin in the present disclosure. In addition, in the present disclosure, the processing method used when the circulating component 4 is manufactured from the metal cylindrical component is not limited to press working. In addition, although the circulating component 4 of the first embodiment is formed of a single component, a circulating component may be formed by joining together a plurality of components in the present disclosure.

A center line M41 of the cylindrical portion 41 is linear. That is, the cylindrical portion 41 has a cylindrical shape. Note that the above-described "rotating" is rotating about the center line M41 of the cylindrical portion 41. Hereinafter, a direction parallel to the center line M41 is referred to as a rotation axis direction. In addition, regarding rotation directions about the center line M41, one is referred to as a first rotation direction L1 and the other is referred to as a second rotation direction L2 (see FIGS. 10 and 11).

As illustrated in FIG. 6, a center line M42 of the leg portion 42 is substantially linear. Therefore, the leg portion 42 has a substantially cylindrical shape. The leg portion 42 is disposed in the through hole 25. The center line M42 of the leg portion 42 is inclined with respect to the assembling direction A. Therefore, the leg portion 42 has a shape that cannot be fitted into the through hole 25.

A scoop-up portion 42a that scoops up the ball 3 from the raceway 7 is provided at a tip portion of the leg portion 42. The center line M42 of the leg portion 42 is tangential to a pitch circle C connecting the centers of the balls 3 rolling on the raceway 7. With this configuration, the ball 3 can be smoothly scooped up or returned from the tip of the leg portion 42.

As illustrated in FIG. 5, the center line M43 of the bent portion 43 has an arc shape (quadrangular circle) when viewed in the direction of arrow V in FIG. 4. Therefore, when the ball 3 rolls in the bent portion 43, a traveling direction of the ball 3 changes by approximately 90°. As illustrated in FIG. 6, a part of the bent portion 43 is disposed in the recess 26 of the nut 2.

As illustrated in FIG. 7, the fixing component 5 includes a holding portion 50 and two fastened portions 51. A cross-sectional shape of the holding portion 50 includes an arcuate portion 52 having an arc shape along an outer peripheral surface of the cylindrical portion 41 and two wall portions 53 linearly extending from ends of the arcuate portion 52 in the assembling direction A. The fastened portion 51 is fastened to the flat surface 22 by the screw 59. With this configuration, the cylindrical portion 41 is pressed against a main body portion 60 of the pedestal component 6. In addition, in the present embodiment, the main body portion 60 of the pedestal component 6 is assembled in a compressed and deformed state by the fastening of the screws 59.

The pedestal component 6 of the first embodiment is a resin product. As illustrated in FIG. 5, the pedestal component 6 includes the main body portion 60 extending along the flat surface 22 of the nut 2 and the two fitting portions 61 protruding in the assembling direction A from both end portions of the main body portion 60.

As illustrated in FIG. 8, when viewed in the assembling direction A, the main body portion 60 extends between the two through holes 25. Therefore, a direction in which the main body portion 60 extends is inclined with respect to the ridge line 24 (the length direction X of the flat surface 22). Hereinafter, the direction in which the main body portion 60 extends is referred to as a length direction Z. In addition, a direction parallel to the flat surface 22 and orthogonal to the length direction Z of the main body portion 60 is referred to as a width direction W of the main body portion 60.

As illustrated in FIG. 9, the main body portion 60 includes a bottom surface 62 facing the assembling direction A and a bearing surface 63 provided on a surface facing a direction opposite to the bottom surface 62. The bottom surface 62 is flat and abuts on the flat surface 22 of the nut 2 (see FIG 5).

The bearing surface 63 is a recessed surface (arcuate surface) that opens toward the circulating component 4. The bearing surface 63 extends from one end to the other end of the main body portion 60 and has a groove shape. As illustrated in FIG. 9, a bottom portion (most recessed portion) 63a of the bearing surface 63 extends in a direction parallel to the flat surface 22 at a central portion of the main body portion 60 in the length direction Z. On the other hand, the bottom portion 63a of the bearing surface 63 is curved so as to approach the flat surface 22 toward the end of the main body portion 60. Therefore, the bearing surface 63 has a portion that is linear in the length direction Z of the main body portion 60 and a portion that is curved in the length direction Z of the main body portion 60. Hereinafter, the linear portion of the bearing surface 63 is referred to as a support surface 70. The curved portion of the bearing surface 63 is referred to as a restricting surface 71.

As illustrated in FIG. 7, the cylindrical portion 41 is placed on the support surface 70. Then, the support surface 70 cooperates with the fixing component 5 to hold the cylindrical portion 41. A cross-sectional shape of the support surface 70 is an arc shape about the center line M41 of the cylindrical portion 41. Therefore, the cylindrical portion 41 is supported by the main body portion 60 without being displaced in the width direction W of the main body portion 60.

As illustrated in FIG. 5, the bent portion 43 is placed on the restricting surface 71, and the restricting surface 71 abuts on the bent portion 43. In addition, since the restricting surface 71 is curved, an area of the restricting surface 71 abutting on the bent portion 43 is not a part in an extending direction of the bent portion 43, but the restricting surface 71 abuts on the bent portion 43 over a certain length. Further, the two bent portions 43 abut on the two restricting surfaces 71 so as to sandwich the two restricting surfaces 71 in the length direction Z of the main body portion 60. Therefore, the circulating component 4 is supported by the main body portion 60 without being displaced in the length direction Z of the main body portion 60. Note that in the present embodiment, the restricting surface 71 is also provided in the fitting portion 61. Therefore, after description of the fitting portion 61, details of the restricting surface 71 will be described.

As illustrated in FIG. 8, the fitting portion 61 is disposed in the recess 26. The fitting portion 61 has an outer surface 65 facing the fitting surface 28 of the recess 26. The outer surface 65 has an arc shape and has the same shape as the fitting surface 28. Therefore, the fitting portion 61 is fitted into the recess 26. In addition, by this fitting, the main body portion 60 is assembled to the nut 2 without being displaced in the direction parallel to the flat surface 22.

When viewed in the assembling direction A, the fitting portion 61 has a shape in which a part of a circular shape is cut out. This cut-out portion is an area overlapping the through hole 25 when viewed in the assembling direction A. Hereinafter, the cut-out portion is referred to as an inner surface 66. The inner surface 66 of the fitting portion 61 is provided with the bearing surface 63 (restricting surface 71) of the main body portion 60. That is, the bearing surface 63 extends to the inner surface 66 of the fitting portion 61. Then, the inner surface 66 (bearing surface 63, restricting surface 71) of the fitting portion 61 abuts on an outer peripheral surface of the bent portion 43.

Next, details of the restricting surface 71 will be described. Note that there are two kinds of restricting surfaces 71, that is, the restricting surface 71 provided on the fitting portion 61 and the restricting surface 71 located at the end of the main body portion 60. For convenience of description, description will be made from the restricting surface 71 provided on the fitting portion 61.

As illustrated in FIG. 8, the restricting surface 71 provided on the fitting portion 61 has an arc shape about the center line M43 of the bent portion 43. Therefore, when viewed in the assembling direction A, the restricting surface 71 provided on the fitting portion 61 is open to the side where the through hole 25 (leg portion 42) is disposed. In addition, a restricting surface 71A provided on one fitting portion 61 of the two fitting portions 61 and a restricting surface 71B provided on the other fitting portion 61 are opened so as to face opposite directions.

As illustrated in FIG. 10, the restricting surface 71A abuts in an arc shape on the outer peripheral surface of the bent portion 43 across the center line M42 and the center line M43 when viewed in the rotation axis direction. That is, the restricting surface 71A includes a first restricting portion 72 abutting on the bent portion 43 in the first rotation direction L1 and a second restricting portion 73 abutting on the bent portion 43 in the second rotation direction L2 with the center line M42 and the center line M43 as boundary lines. Therefore, rotation (displacement) in the first rotation direction L1 by the bent portion 43 is restricted by the first restricting portion 72. In addition, rotation (displacement) in the second rotation direction L2 by the bent portion 43 is restricted by the second restricting portion 73.

Note that the first restricting portion 72 is a portion of the restricting surface 71A disposed in the first rotation direction L1 with respect to the boundary lines (the center line M42 and the center line M43). In addition, the second restricting portion 73 is a portion of the restricting surface 71A disposed in the second rotation direction L2 with respect to the boundary lines (the center line M42 and the center line M43). As illustrated in FIGS. 8 and 10, the length of the restricting surface 71A abutting on the bent portion 43 in the circumferential direction is longer in the second restricting portion 73 than in the first restricting portion 72. That is, a supporting force for supporting the bent portion 43 is larger in the second restricting portion 73 than in the first restricting portion 72 on the restricting surface 71A.

On the other hand, as illustrated in FIG. 11, regarding the restricting surface 71B provided on the other fitting portion 61, the length of the restricting surface 71B abutting on the bent portion 43 in the circumferential direction is longer in the first restricting portion 72 disposed in the first rotation direction L1 than in the second restricting portion 73 disposed in the second rotation direction L2 with respect to the boundary lines (the center line M42 and the center line M43). That is, the supporting force for supporting the bent portion 43 is larger in the first restricting portion 72 than in the second restricting portion 73 on the restricting surface 71B. Therefore, the supporting force of the restricting surface 71 is uniform without being biased to one rotation direction.

In addition, as illustrated in FIG. 12, the restricting surface 71 provided at the end of the main body portion 60 has an arc shape about the center line M42 of the bent portion 43. That is, the restricting surface 71 located at the end of the main body portion 60 also includes the first restricting portion 72 abutting on the bent portion 43 in the first rotation direction L1 and the second restricting portion 73 abutting on the bent portion 43 in the second rotation direction L2 with the center line M42 as a boundary line. Therefore, the rotation of the bent portion 43 is also restricted by the restricting surface 71 provided on the main body portion 60.

From the above, although the cross-sectional shape of the bearing surface 63 is the same (arc shape) about the center line M of the circulating component 4, the directions in which the support surface 70 and the restricting surfaces 71 are opened are different because the abutting objects are different (the cylindrical portion 41 or the bent portion 43). That is, the support surface 70 restricts the displacement of the cylindrical portion 41 in the width direction W of the main body portion 60, and the restricting surfaces 71 each restrict the displacement of the bent portion 43 in the rotation direction.

Next, effects of the ball screw device 100 of the first embodiment will be described. Before the circulating component 4 is assembled, the pedestal component 6 is disposed on the flat surface 22 of the nut 2. At this time, the two fitting portions 61 of the pedestal component 6 are fitted into the recesses 26 of the nut 2. With this configuration, the pedestal component 6 is assembled to the nut 2 without being displaced in the direction parallel to the flat surface 22.

Next, the circulating component 4 is assembled. The circulating component 4 and the leg portion 42 of the circulating component 4 are inserted into the through hole 25. At this time, the cylindrical portion 41 and the two bent portions 43 are disposed on the bearing surface 63 of the pedestal component 6. According to this, the cylindrical portion 41 is supported by the support surface 70, and displacement in the width direction W of the main body portion 60 is suppressed. In addition, the two bent portions 43 abut on the two restricting surfaces 71, and displacement in the length direction Z of the main body portion 60 is suppressed. From the above, the circulating component 4 is assembled to the pedestal component 6 without being displaced in the direction parallel to the flat surface 22.

In addition, the bent portion 43 abuts on the restricting surface 71, and displacement in the rotation direction is suppressed. Therefore, displacement in the rotation direction by the leg portion 42 is also suppressed. As a result, the tip of the leg portion 42 is disposed at a predetermined assembling position, and the ball 3 can be smoothly scooped up or returned.

In addition, the support surface 70 has the same shape as the outer peripheral surface of the cylindrical portion 41, and abuts on the outer peripheral surface of the cylindrical portion 41 without a gap. A conventional cylindrical portion is sandwiched between the flat surface 22 of the nut 2 and the fixing component 5, but according to the present embodiment in which the cylindrical portion is sandwiched between the support surface 70 and the fixing component 5, a frictional force on the cylindrical portion 41 is large. Therefore, a fixing force for fixing the cylindrical portion 41 is larger than before. With this configuration, the circulating component 4 is less likely to vibrate, and wear of the circulating component 4 is suppressed.

In addition, even if the cylindrical portion 41 of the circulating component 4 wears, a gap is not formed between the fixing component 5 and the pedestal component 6. In other words, even if the outer peripheral surface of the cylindrical portion 41 is reduced in diameter due to wear, the main body portion 60 compressively deformed is elastically deformed, so that a gap is not formed. Therefore, a sandwiching force of the fixing component 5 and the pedestal component 6 is maintained for a long period of time.

In addition, as a portion into which the fitting portion 61 is fitted, the recess 26 for avoiding contact with the bent portion 43 is used. With this portion, it is not necessary to separately form a recess for fitting the fitting portion 61, and it is possible to avoid a decrease in the strength of the nut 2.

As described above, the ball screw device 100 of the first embodiment includes the screw shaft 1, the nut 2 penetrated by the screw shaft 1, the plurality of balls 3 disposed between the screw shaft 1 and the nut 2, the circulating component 4 having a circular cross-sectional shape and circulating the balls 3, the pedestal component 6 disposed between the outer peripheral surface 21 of the nut 2 and the circulating component 4, and the fixing component 5 provided such that the fixing component 5 and the pedestal component 6 sandwich the circulating component 4. The nut 2 is provided with the two through holes 25 penetrating the nut 2 in the assembling direction A in which the circulating component 4 is assembled to the outer peripheral surface 21 of the nut 2. The circulating component 4 includes the cylindrical portion 41 having a cylindrical shape and disposed on the outer peripheral side of the nut 2, the two leg portions 42 inserted into the through holes 25, and the two bent portions 43 connecting the cylindrical portion 41 and the leg portions 42. The pedestal component 6 includes the main body portion 60 extending along the cylindrical portion 41 and the two bent portions 43. The main body portion 60 includes the bearing surface 63 that has a groove shape and on which the cylindrical portion 41 and the two bent portions 43 are disposed. The cross-sectional shape of the bearing surface 63 is an arc shape about the center line M41 of the cylindrical portion 41 and the center lines M43 of the two bent portions 43. The portion of the bearing surface 63 abutting on the cylindrical portion 41 forms the support surface 70 having an arc shape and opened in the direction opposite to the assembling direction A when viewed in the rotation axis direction parallel to the center line M41 of the cylindrical portion 41. The portions of the bearing surface 63 abutting on the respective bent portions 43 form the restricting surfaces 71 each having an arc shape and opened to the side where the through hole 25 is disposed when viewed in the assembling direction A. The restricting surfaces 71 each include the first restricting portion 72 abutting on the bent portion 43 in the first rotation direction L1 about the center line M41 of the cylindrical portion 41, and the second restricting portion 73 abutting on the bent portion 43 in the second rotation direction L2 opposite to the first rotation direction L1.

According to the ball screw device 100 of the first embodiment, the leg portion 42 is not displaced in the rotation direction. In addition, a fixing force for fixing the circulating component 4 is high, and wear of the circulating component 4 is suppressed.

In addition, in the first embodiment, the recesses 26 to avoid contact with the two bent portions 43 are provided at the edges of the through holes 25 on the outer peripheral surface 21 of the nut 2. The pedestal component 6 includes the two fitting portions 61 protruding from the end portions of the main body portion 60 in the assembling direction A and fitted into the recesses 26.

According to the first embodiment, the circulating component 4 is not displaced in the direction parallel to the flat surface 22 of the nut 2. In addition, it is possible to avoid a decrease in the strength of the nut 2.

In addition, in the first embodiment, the fitting portion 61 includes the inner surface 66 facing the through hole 25 as viewed in the assembling direction A. The bearing surface 63 is extended to the inner surface 66. The fitting portion 61 abuts on the bent portion 43 or the leg portion 42.

According to the first embodiment, the number of portions of the pedestal component 6 abutting on the bent portion 43 or the leg portion 42 increases. Therefore, the displacement of the leg portion 42 in the rotation direction can be more reliably suppressed.

In addition, in the first embodiment, the pedestal component 6 is made of resin.

According to the first embodiment, the pedestal component 6 can be assembled in a state of being compressed in the assembling direction A. Therefore, even if the cylindrical portion 41 wears, a gap is not formed between the fixing component 5 and the pedestal component 6.

In addition, in the first embodiment, the two leg portions 42 extend tangentially to the raceway 7 between the screw shaft 1 and the nut 2.

According to the first embodiment, the scooping up of the balls 3 and the returning of the balls 3 become smooth.

Although the first embodiment has been described above, the present disclosure is not limited to the examples described in the first embodiment. For example, for the pedestal component 6, a softer metal material than the nut 2 and the circulating component 4, such as brass, may be used instead of a resin material. In the case of a pedestal component made of a soft metal material, the pedestal component is compressed by a load from the fixing component 5. Then, when the cylindrical portion 41 wears, the pedestal component made of a soft metal material is deformed, and a gap is not formed between the fixing component 5 and the pedestal component 6. Therefore, it is possible to exhibit the same operational effects as those of the resin-made pedestal component 6 of the first embodiment.

In addition, in the present disclosure, glass fiber extending in the length direction Z of the main body portion 60 may be included inside the resin-made main body portion 60. According to this, it is difficult for the pedestal component 6 to thermally expand. Therefore, a difference in linear expansion coefficient from the nut 2 made of metal is reduced, and creep deformation is less likely to occur.

In addition, the pedestal component of the present disclosure may be manufactured from a material other than the resin material or the soft metal material described above. Even with such a pedestal component, it is possible to exhibit the same operational effects as those of the first embodiment, and it is possible to suppress the displacement of the leg portion 42 in the rotation direction and the displacement in the direction parallel to the flat surface 22. In addition, the fixing force for fixing the circulating component 4 is high, and wear of the circulating component 4 can also be suppressed.

In addition, in the circulating component 4 of the first embodiment, the leg portions 42 are inclined to the assembling direction A. However, in the present disclosure, the circulating component may be such that the leg portions 42 are parallel to the assembling direction A (the leg portions 42 can be fitted into the through holes 25). Even in such a circulating component, there is a possibility that a gap is formed between the leg portion 42 and the through hole 25 due to a manufacturing error. Therefore, according to the pedestal component of the present disclosure, the leg portions 42 can be supported, and the displacement of the leg 42 portion in the rotation direction can be suppressed.

Next, pedestal components according to modifications will be described. Note that in the following description, only differences from the first embodiment will be described.

### (Modification 1)

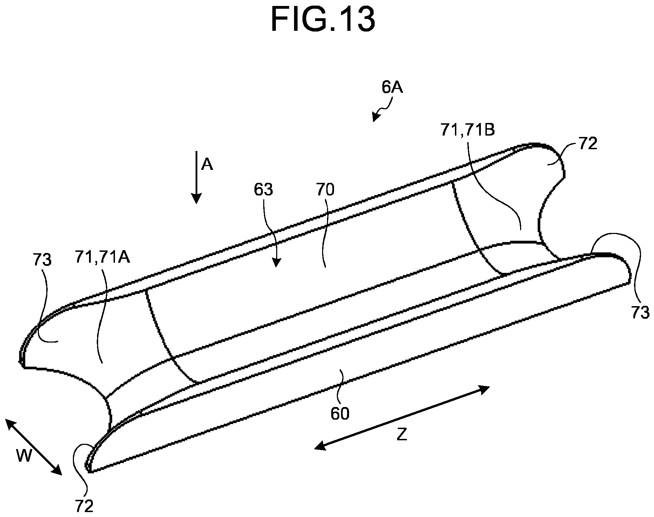

FIG. 13 is a perspective view of a pedestal component according to Modification 1 as viewed in the assembling direction. As illustrated in FIG. 13, the pedestal component 6A according to Modification 1 is different from the pedestal component 6 of the first embodiment in that the pedestal component 6A does not include the fitting portion 61. According to the pedestal component 6A, displacement of the bent portion 43 and the leg portion 42 in the rotation direction is restricted by the restricting surface 71 (71A, 71B) provided at the end of the main body portion 60. In addition, the fixing force for fixing the circulating component 4 is high, and wear of the circulating component 4 can also be suppressed. However, since the pedestal component 6A is not positioned, there is a possibility that the circulating component 4 supported by the pedestal component 6 is displaced in the direction parallel to the flat surface 22 of the nut 2.

### (Modification 2)

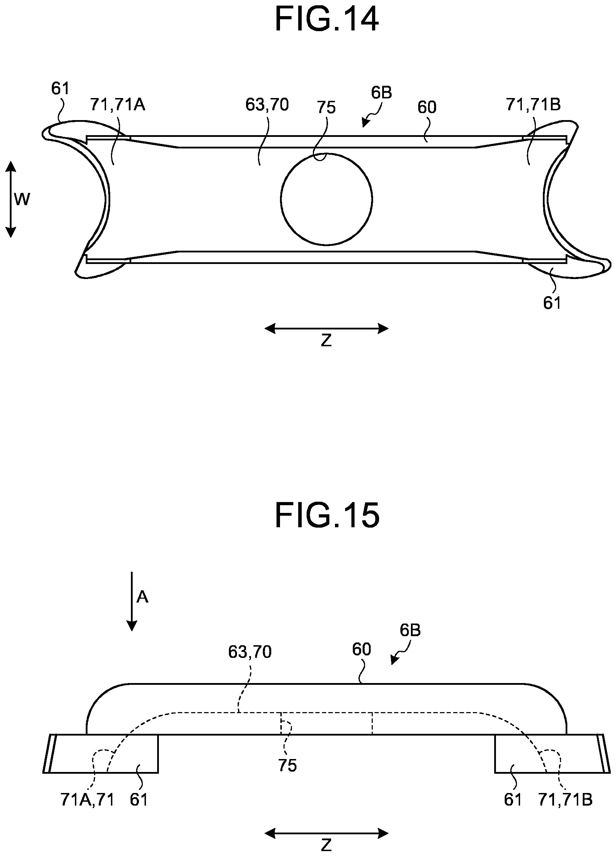

FIG. 14 is a diagram of a pedestal component according to Modification 2 as viewed in the assembling direction. FIG. 15 is a side view of the pedestal component according to Modification 2 as viewed from the side. As illustrated in FIGS. 14 and 15, the pedestal component 6B according to Modification 2 is different from the pedestal component 6 of the first embodiment in that a through hole 75 having a circular shape is provided. The through hole 75 penetrates the main body portion 60 in a direction parallel to the assembling direction A. That is, the through hole penetrates a part of the support surface 70 (bearing surface 63).

According to the pedestal component 6B of Modification 2, when the pedestal component 6B is exposed to a high temperature during use of the ball screw device 100, the main body portion 60 thermally expands in the length direction Z. With this configuration, the pedestal component 6B presses the two bent portions 43 abutting on the restricting surfaces 71 away from each other. In addition, the main body portion 60 receives a reaction force from the two bent portions 43, and the main body portion 60 is deformed such that the through hole 75 is crushed. Therefore, according to Modification 2, displacement of the bent portion 43 due to the thermal expansion of the pedestal component 6B is suppressed.

Note that the through hole 75 of Modification 2 has a circular shape, but the present disclosure is not limited thereto. In addition, a plurality of through holes 75 may be provided.

### (Modification 3)

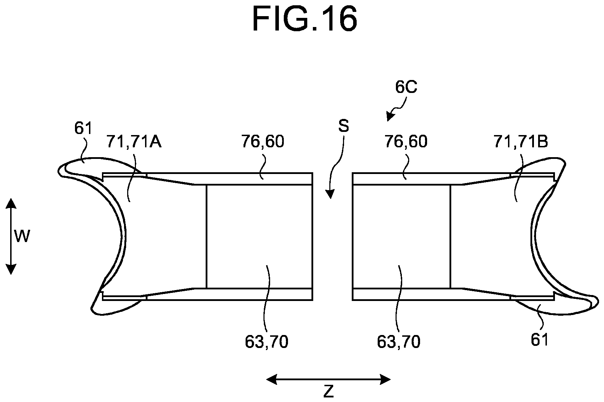

FIG. 16 is a diagram of a pedestal component according to Modification 3 as viewed in the assembling direction. As illustrated in FIG. 16, the pedestal component 6C according to Modification 3 is different from the pedestal component 6 of the first embodiment in that the main body portion 60 is divided into two. The main body portion 60 includes two divided main body portions 76 separated at the central portion of the main body portion 60 in the length direction Z. In addition, the length of the main body portion 60 obtained by combining the two divided main body portions 76 in the length direction is shorter than that of the main body portion 60 of the first embodiment. That is, a gap S is formed between the two divided main body portions 76.

As described above, according to the pedestal component 6C of Modification 3, when the divided main body portion 76 is thermally expanded, the divided main body portions expand so that the gap S becomes small. Therefore, displacement of the bent portion 43 can be suppressed.

### Reference Signs List

100 BALL SCREW DEVICE
1 SCREW SHAFT
2 NUT
3 BALL
4 CIRCULATING COMPONENT
5 FIXING COMPONENT
6 PEDESTAL COMPONENT
21 OUTER PERIPHERAL SURFACE
22 FLAT SURFACE
25 THROUGH HOLE
26 RECESS
40 RETURN PATH
41 CYLINDRICAL PORTION
42 LEG PORTION
43 BENT PORTION
60 MAIN BODY PORTION
61 FITTING PORTION
63 BEARING SURFACE
66 INNER SURFACE
70 SUPPORT SURFACE
71, 71A, 71B RESTRICTING SURFACE
72 FIRST RESTRICTING PORTION
73 SECOND RESTRICTING PORTION
75 THROUGH HOLE
76 DIVIDED MAIN BODY PORTION
M, M41, M42, M43 CENTER LINE

## Claims

1. A ball screw device comprising:
a screw shaft;
a nut penetrated by the screw shaft;
a plurality of balls disposed between the screw shaft and the nut;
a circulating component having a circular cross-sectional shape and circulating the balls;
a pedestal component disposed between an outer peripheral surface of the nut and the circulating component; and
a fixing component provided such that the fixing component and the pedestal component sandwich the circulating component, wherein
the nut is provided with two through holes penetrating the nut in an assembling direction in which the circulating component is assembled to the outer peripheral surface of the nut,
the circulating component includes
a cylindrical portion having a cylindrical shape and disposed on an outer peripheral side of the nut,
two leg portions inserted into the through holes, and
two bent portions connecting the cylindrical portion and the leg portions,
the pedestal component includes a main body portion extending along the cylindrical portion and the two bent portions,
the main body portion includes a bearing surface that has a groove shape and on which the cylindrical portion and the two bent portions are disposed,
a cross-sectional shape of the bearing surface is an arc shape about center lines of the cylindrical portion and the two bent portions,
a portion of the bearing surface abutting on the cylindrical portion forms a support surface having an arc shape and opened in a direction opposite to the assembling direction when viewed in a rotation axis direction parallel to the center line of the cylindrical portion,
portions of the bearing surface abutting on the respective bent portions form restricting surfaces each having an arc shape and opened to a side where the through hole is disposed when viewed in the assembling direction, and
the restricting surfaces each include
a first restricting portion abutting on the bent portion in a first rotation direction about the center line of the cylindrical portion, and
a second restricting portion abutting on the bent portion in a second rotation direction opposite to the first rotation direction.

2. The ball screw device according to claim 1,
wherein
recesses to avoid contact with the two bent portions are provided at edges of the through holes on the outer peripheral surface of the nut, and
the pedestal component includes two fitting portions protruding from end portions of the main body portion in the assembling direction and fitted into the recesses.

3. The ball screw device according to claim 2,
wherein
the fitting portion includes an inner surface facing the through hole when viewed in the assembling direction,
the bearing surface is extended to the inner surface, and
the fitting portion abuts on the bent portion or the leg portion.

4. The ball screw device according to claim 1, wherein
the pedestal component is made of resin.

5. The ball screw device according to claim 1,
wherein
the two leg portions extend tangentially to a raceway between the nut and the screw shaft.

6. The ball screw device according to any one of claims 1 to 5, wherein
the main body portion is provided with a through hole penetrating the main body portion.

7. The ball screw device according to any one of claims 1 to 5, wherein
the main body portion includes two divided main body portions separated at a central portion of the main body portion in a length direction of the main body portion, and
a gap is provided between the two divided main body portions.
